# EUROPEAN PATENT APPLICATION

(11) **EP 4 674 650 A1**
(43) Date of publication of application: **07.01.2026**
(21) Application number: 24186755.5
(22) Date of filing: 05.07.2024
(51) Int. Cl.: B60G 7/00

(54) **A VEHICLE ELECTRIC AXLE**

(71) Applicant: VOLVO TRUCK CORPORATION, 405 08 Göteborg (SE)
(72) Inventor: MAES, Geert, 9250 Waasmunster (BE); HENDRIKS, Jan, 426 68 VÄSTRA FRÖLUNDA (SE)
(74) Representative: Germain Maureau

(57) **Abstract**

The invention relates to a vehicle electric axle, comprising at least one electric motor and a suspension system including a longitudinal element (7) which is a reaction rod (7) or a leaf spring (17), the longitudinal element (7) being rotatably mounted at one end around a reaction rod bracket (8) and at the other end around a dampening member (6);
wherein said at least one electric motor includes a power supply routing device to be connected to an electrical power source, said power supply routing device comprises at least one busbar (12), a straight portion (12a) of which extending longitudinally along the longitudinal element (7, 17), and
wherein said at least one busbar (12) includes two curved portions (12b, 12c) forming two cavities each receiving at least part of a longitudinal end (7c, 7d) of the longitudinal element (7).

## Description

### TECHNICAL FIELD

The disclosure concerns a vehicle electric axle or 'E-axle' on which is provided at least one electric motor configured to transmit torque to the wheel shafts. Like on a classic combustion engine vehicle (where power to wheels is transferred from engine to axle through propeller shaft), an axle with integrated motors (or 'E-axle') is seated in a suspension system for its connection to the vehicle chassis.

The disclosure can be applied in heavy-duty vehicles, such as trucks, buses and construction equipment. Although the disclosure may be described with respect to a particular vehicle, the invention is not restricted to any particular vehicle.

### BACKGROUND

The propulsion systems of vehicles are continuously developed to meet the demands from the market. A particular aspect relates to the emission of environmentally harmful exhaust gas. Therefore, vehicles propelled by electric machines have been increasingly popular in the automotive industry. This trend also spreads to trucks and other heavy-duty vehicles.

Up to now, the majority of electric trucks are designed in the following manner: a big electric motor is provided between the frame rails and delivers a torque to a rear axle through a propeller shaft (or transmission shaft). The electric motor(s) and the power source, e.g. battery pack, are both fastened or fixed to the vehicle chassis so that there are no relative movement between the electric motor(s) and the battery pack. As a result, the power supply routing device, e.g. electric cables or busbar are not subjected to stretching or elongation.

Designers are continuously focused on increasing the overall yield/efficiency of the powertrain and the problem of using a propeller shaft is that it degrades efficiency due to friction losses. This is why developers came up with the idea of having the electric motor(s) directly fastened or fixed to the axle body, thereby eliminating the need for a propeller shaft. This configuration is known as an electric axle or 'E-axle'. Another benefit of having a E-axle is that it frees up space for the Energy Storage System (ESS) between the two longitudinal frame rails.

However, a problem is that, on one hand, the energy storage compartment (also known as the `Electrical Energy Storage System (EESS)'), which can weigh up to 4 ton, is fixed to the chassis of the vehicle, e.g. hung on frame rail while, one the other hand, the electric motors fastened to the axle body move in accordance with the suspension system making the connection between the axle body and the vehicle chassis. As a result, the power supply routing device that transmits power from the EESS to the electric motor(s) of the E-axle is subject to stretching/elongation resulting from the movement of the suspension system.

Today, high-voltage cables are used to transfer electrical energy from the EESS to the electric motor(s). These cables are routed using clamping points, among which a first clamping point is provided on the axle body and a last clamping point is provided on the vehicle chassis. In order to absorb the suspension movements of the axle relative to frame, there is a need to have some free length between the first and the last clamping points. This free length presents a high risk of damage due to friction and bending, but also to the road environment (stones, dirt, snow, etc.). In addition, cables can crack under the effect of fatigue due to the constant changes in length and bending radius caused by suspension movements.

The present invention aims to remedy these drawbacks, while offering a very compact solution in comparison with various suspension systems and axle configurations.

### SUMMARY

According to a first aspect of the disclosure, a vehicle electric axle comprises at least one electric motor and a suspension system including a longitudinal element which is a reaction rod or a leaf spring, the longitudinal element being mounted, preferably rotatably mounted, at one end around a reaction rod bracket and at the other end around a dampening member;
wherein said at least one electric motor includes a power supply routing device to be connected to an electrical power source, said power supply routing device comprises at least one busbar, a straight portion of which extending longitudinally along the longitudinal element, and
wherein said at least one busbar includes two curved portions forming two cavities each receiving at least part of a longitudinal end of the longitudinal element.

The first aspect of the disclosure may seek to follow the routing of the suspension components and to use busbars, thus avoiding loose/unclamped cables. The advantage of busbars is that they are not restricted to large bending radii and can be shaped to better fit alongside suspension components, but particularly can be shaped into coil springs around rotation centers in the suspension system.

In some examples, the longitudinal element is a reaction rod and the dampening member is an air spring member supporting two air springs.

In some examples, the air spring member extends longitudinally and comprises an air spring reception area at a front end and an air spring reception area at a rear end, as well as an axle reception area in a middle area of the air spring member.

In some examples, a first air spring is arranged at the front of the electric drive axle and a second air spring is arranged at the rear of the drive axle.

In some examples, the reaction rod is rotatably mounted around the air spring member and around the reaction rod bracket via a transverse axle.

In some examples, the longitudinal element is secured to an anti-roll bar.

In some examples, the longitudinal element is a reaction rod and the dampening member is a leaf spring member supporting a leaf spring.

In some examples, the longitudinal element is a leaf spring and the dampening member is an air spring member supporting one air spring.

In some examples, each curved portion is configured so that each longitudinal end of the longitudinal element is in contact with or is located close to the at least one busbar in first extreme configuration of the suspension system and so that each longitudinal end of the longitudinal element is located remotely from the first busbar in a second extreme configuration of the suspension system.

In some examples, the straight portion of said at least one busbar is fixed to (or is in contact with) a straight central part of the longitudinal element and said two curved portions each at least partly follows the contour of a rounded end part of the longitudinal element, each curved portion having an overlength over the corresponding perimeter of the rounded end part of the longitudinal element.

In some examples, the power supply routing device comprises another busbar connecting said at least one busbar to an electric motor.

In some examples, said at least one busbar and said another busbar can be a single busbar. Alternatively, said at least one busbar and said another busbar can be different busbars.

In some examples, said at least one busbar is connected to electric cables supplying power from a power supply.

In some examples, a connection point between the electric cables and said at least one busbar is located on the chassis frame rail or on the reaction rod bracket.

In some examples, said at least one busbar comprises pre-formed copper sheets surrounded by an insulating layer.

In some examples, the power supply comprises battery packs.

In some examples, said another busbar is connected to an electric motor drive (EMD) or to an electric motor (EM).

In some examples, said another busbar is connected to an electric motor drive (EMD) which is connected to an electric motor (EM). In this way, DC-current is transmitted through said another busbar.

In some examples, said another busbar is connected directly to the electric motor (EM) (the EMD being frame mounted). In this way, AC-current is transmitted through said another busbar.

In some examples, a vehicle comprises a vehicle electric axle described above.

In some examples, the power supply is hung onto a chassis of the vehicle.

In some examples, the vehicle comprises two chassis frame rails.

In some examples, the vehicle electric axle is a rear axle or a front axle.

In some examples, the vehicle is a truck.

The above aspects, accompanying claims, and/or examples disclosed herein above and later below may be suitably combined with each other as would be apparent to anyone of ordinary skill in the art.

Additional features and advantages are disclosed in the following description, claims, and drawings, and in part will be readily apparent therefrom to those skilled in the art or recognized by practicing the disclosure as described herein.

### BRIEF DESCRIPTION OF THE DRAWINGS

With reference to the appended drawings, below follows a more detailed description of aspects of the disclosure cited as examples.
**FIG. 1** is a side view of a power supply routing device of a vehicle of the invention according to a first example.
**FIG. 2** is a bottom view of the power supply routing device of **FIG. 1****.**
**FIG. 3** is a detailed perspective view of the power supply routing device.
**FIG. 4** is a detailed side view of the power supply routing device.
**FIG. 5** is a side view of the power supply routing device, in an upper position of the suspension system.
**FIG. 6** is a detailed side view of the power supply routing device of **FIG. 5****.**
**FIG. 7** is a side view of the power supply routing device, in a lower position of the suspension system.
**FIG. 8** is a detailed side view of the power supply routing device of **FIG. 7****.**
**FIG. 9** is a partial side view of the power supply routing device, during a first pre-assembly step.
**FIG. 10** is a partial side view of the power supply routing device, during a second pre-assembly step.
**FIG. 11** is a side view showing an assembly step of the power supply routing device.
**FIG. 12** is a side view of the power supply routing device at the end of the assembly step.
**FIG. 13** is a perspective view of a power supply routing device of a vehicle of the invention according to a second example.
**FIG. 14** is a side view of the power supply routing device of **FIG. 13****.**
**FIG. 15** is a perspective view of a power supply routing device of a vehicle of the invention according to a third example.
**FIG. 16** is a side view of the power supply routing device of **FIG. 15****.**
**FIG. 17** is a perspective view of a power supply routing device of a vehicle of the invention according to a fourth example.
**FIG. 18** is a side view of the power supply routing device of **FIG. 17****.**
**FIG. 19** is a block diagram illustrating a first configuration of a power supply routing device of a vehicle of the invention.
**FIG. 20** is a block diagram illustrating a second configuration of a power supply routing device of a vehicle of the invention.

### DETAILED DESCRIPTION

Aspects set forth below represent the necessary information to enable those skilled in the art to practice the disclosure.

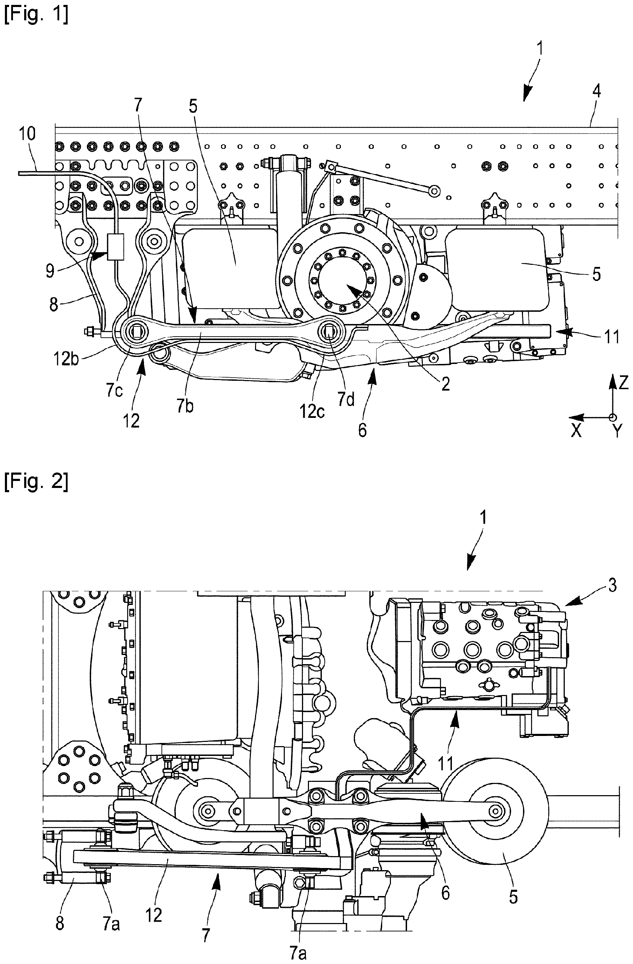

**FIG. 1** is a side view of a power supply routing device of a vehicle of the invention according to a first example, in particular is a partial view of a vehicle 1, which is a battery electric vehicle, a fuel cell electric vehicle or a hybrid electric vehicle, i.e. a vehicle using electric energy as a source of power for a prime or secondary mover.

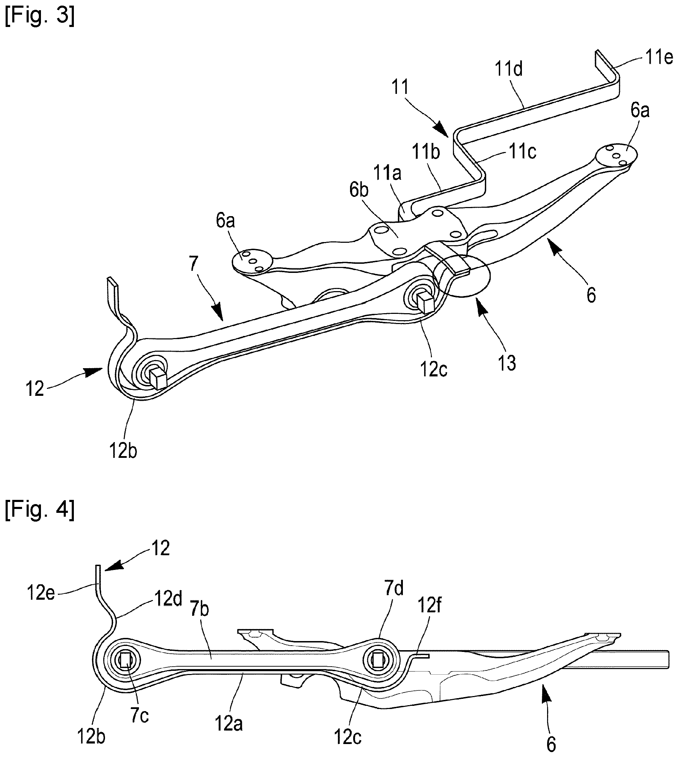

**FIG. 2** is top view of the power supply routing device of **FIG. 1****,** whereas **FIG. 3** is a detailed perspective view of the power supply routing device.

The vehicle 1 extends generally in a longitudinal direction X corresponding to the greatest dimension of the vehicle (length). The spatial representation of the vehicle 1 is supplemented by a transverse direction Y (width) and a vertical direction Z perpendicular to the road/ground surface.

It should be appreciated that the vehicle 1 may be an automobile, a truck, a bus, a van, a construction equipment or a sport utility vehicle, for example. As used herein, the term vehicle is not limited to just an automobile, a truck a van or a sport utility vehicle, but may also include any self-propelled or towed conveyance suitable for transporting a burden. In the example, the vehicle 1 is a truck, comprising two axles 2, namely a front axle and a rear axle. Vehicle configurations with multiple front axles and/or multiple rear axles can be used.

At least one of the two axles is motorized, i.e. includes at least one electric motor. In the example it is considered that only the rear axle is motorized, i.e. vehicle is a propulsion vehicle (in which only the rear axle(s) is/are motorized). However, the invention obviously also applies to all-wheel drive vehicles and to traction vehicles (in which only the front axle(s) is/are motorized).

The electric drive axle 2 includes a powertrain comprising at least one electric motor 3. Advantageously, the electric motor 3 is AC type motor (synchronous or asynchronous). Alternatively, the electric motor 3 could be DC type motor as well (brushed). More generally, any electric motor is suitable.

The vehicle 1 comprises a power supply routing device for transmitting power from a power supply to the electric drive axle 2 of the vehicle 1.

The power supply/source (for example battery packs) is normally fixed to the vehicle chassis. Typically, and considering that the vehicle in question is a truck, the battery packs are hung on one chassis frame rail 4. The vehicle 1 may, for example, comprise two chassis frame rails 4, arranged on the right and left sides of the vehicle 1.

In a conventional manner, each axle of the vehicle comes with a suspension system that connects the axle body to the vehicle chassis, resulting in that a relative movement along the vertical direction is possible between each axle body and the vehicle chassis to absorb to road deformation.

The suspension system may be an air suspension system comprising two air springs 5. An air spring is basically a column of air confined within a rubber-and-fabric container shaped like a bellows. The spring action results from the compression and expansion of the air. When used on road vehicles, air springs can keep the vehicle at a constant standing height regardless of load. Thus, the air pressure in the suspension can be increased or decreased depending on load. An air suspension system also allows lifting and lowering of the chassis relative to the ground (ground clearance) so as to ease trailer hook up or matching height of loading and unloading docks. It is particularly the total suspension travel that sets the free length needed for the cable prior art solution.

The air springs 5 are fixed/fastened to the chassis frame rail 4, a first air spring 5 being arranged at the front of the axle 2 and a second air spring 5 being arranged at the rear of the axle 2. Front/rear directions shall be interpreted in accordance with the longitudinal direction to which it is referred to above.

An air spring member 6 connects the two air springs 5 to the axle 2. The air spring member 6 extends longitudinally and comprises an air spring reception area 6a at a front end and an air spring reception area 6a at a rear end, as well as an axle reception area 6b at the middle of the air spring member 6. Each air spring reception area 6a supports a lower end of an air spring 5.

A longitudinal reaction rod 7 is rotatably mounted around the air spring member 6 and around a reaction rod bracket 8 mounted on the chassis frame rail 4. More precisely, the reaction rod 7 is rotatably mounted around the air spring member 6 and around the reaction rod bracket 8 via a transverse axle 7a. The reaction rod 7 takes up longitudinal forces from start and brake forces. The reaction rod bracket 8 connects the reaction rod 7 to the chassis frame rail 4. The reaction rod includes 7 a straight central part 7b and two rounded end parts 7c, 7d.

The electric motor 3 includes its own power supply routing device waiting to be connected to a power source. The power supply routing device comprises two parts, namely a first part extending from the power supply to a connection point 9 located on the reaction rod bracket 8 and a second part from the connection point 9 to the electric motor 3.

The first part includes electric cables 10, typically high voltage electric cables, and are intended to connect the power supply to an area of the chassis frame rail 4 or to the reaction rod bracket 8, for example to a connection point 9 located on the reaction rod bracket 8.

The second part uses at least one flexible busbar 11, 12. A busbar is a transmission line for supplying the power from the connection point 9 to the electric motor 3 and is formed to a metal plate shape. Busbars are typically pre-formed copper sheets surrounded by an isolating layer. The sheets can be shaped to any desired form and with a very small bending radius.

In the example, two busbars 11, 12 are used for connecting respectively to the two terminals of the battery pack. Two busbars are needed for each electric motor. For instance, a `double layer' busbar can be used: In such configuration, two conductor elements (or busbars) insulated from each other are provided in a single package. Advantageously, two double layer busbars can be used for a E-axle with dual motor configuration.

A first busbar 12 is intended to connect the electric cables 10 to a second busbar 11, the second busbar 11 being intended to connect the first busbar 12 to the electric motor 3. The junction 13 between the two busbars 11, 12 is located near the middle of the air spring member 6, close to the axle reception area 6b.

The second busbar 11 includes successively, from the air spring member 6 and until the electric motor 3: a first transversal part 11a that goes under the axle reception area 6b at the middle of the air spring member 6, a first longitudinal part 11b, a second transversal part 11c, a second longitudinal part 11d and a third transversal part 11e. These successive parts enable to follow the contours of the electric motor 3 and of the suspension components, ensuring an optimal protection and a robust fixation of the routing device.

The first busbar 12 is intended to connect the connection point 9 to the first busbar 11, at the junction 13. The first busbar 12 extends longitudinally, it supports the reaction rod 7 and advantageously follows at least the lower contour of the reaction rod 7.

The air spring member 6 can first be placed on the electric drive axle 2, so that the second busbar 11 can be connected to the electric motor 3. The first busbar 12 is used on the reaction rod 7, as the reaction rod 7 is assembled after the air spring member 6.

In a general way, the two busbars 11, 12 used in the vehicle electric axle can be two busbar portions/segments of one and the same busbar. The busbars can be two single layers (distributed on each side of the suspension system and reaching one electric motor or two single layers per side reaching two electric motors) or can be a double layer on one side reaching one electric motor or a double layer on each side reaching two electric motors.

**FIG. 4** is a detailed side view of the power supply routing device. More particularly, the first busbar 12 may include a central part 12a that is fixed to the straight central part 7b of the reaction rod 7 and two end parts 12b, 12c each following at least partly the contour of a rounded end part 7c, 7d. Each end part 12b, 12c is a fold which defines a cavity for receiving at least partly a rounded end part 7c, 7d of the reaction rod 7.

Each end part 12b, 12c advantageously has an overlength over the corresponding perimeter of the end part 7c, 7d, so that each end part 12b, 12c is in contact with the corresponding end part 7c, 7d in an upper position (also called lifted position) of the suspension system and so that the end part 12b, 12c is located at a distance from the corresponding end part 7c, 7d in a lower position (also called bump position) of the suspension system. Thus, the overlength acts like a spring, for example like a wind-up spring of a clock. The spring function enables the second busbar 12 to adapt to suspension movements. The second busbar 12 may include two consecutive folds 12d, 12e between the reaction rod 7 and the connection point 9, and one fold point 12f between the reaction rod 7 and the air spring member 6. The folds 12d, 12e, 12f are advantageously points of inflection.

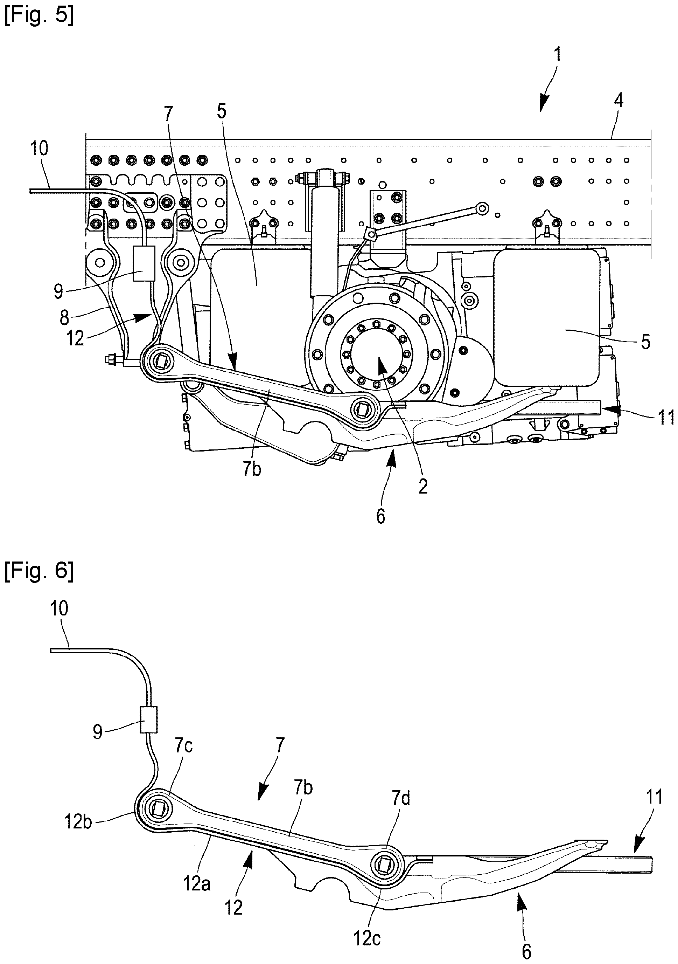

**FIG. 5** is a side view of the power supply routing device, in an upper position of the suspension system, while **FIG. 6** is a detailed side view of the power supply routing device of **FIG. 5****.** In this lower position of the suspension system, the end part 7c of the reaction rod located on the side of the connection point 9 is an upper position whereas the end part 7d of the reaction rod located on the side of the electric drive axle 2 is in a lower position. In particular, the end part 7c is above the end part 7d. In this configuration, the spring property of the first busbar 12 makes that the busbar loops at the end parts 12b, 12c become smaller and thus the each end part 12b, 12c of the first busbar 12 is in contact with or comes close to the corresponding end part 7c, 7d of the reaction rod 7.

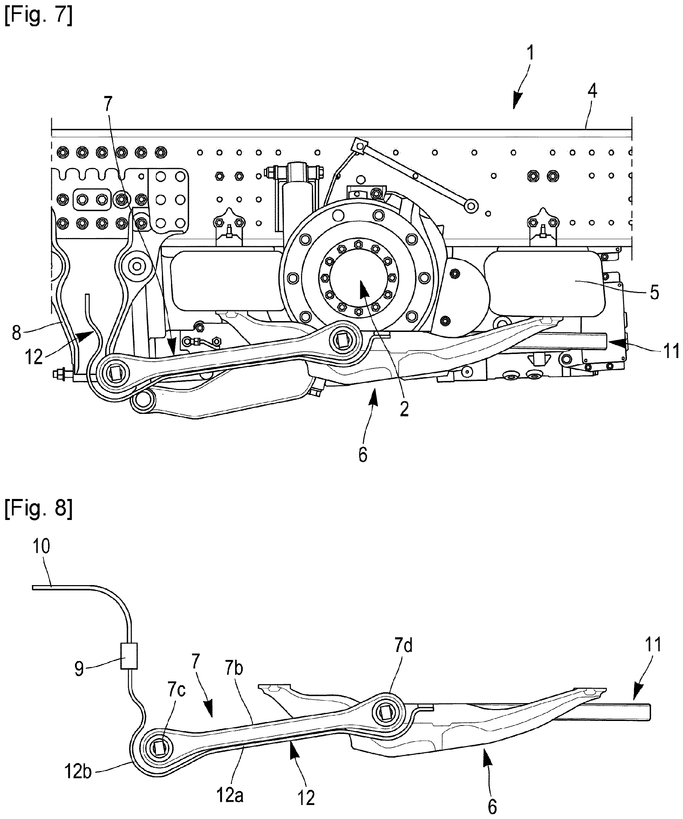

**FIG. 7** is a side view of the power supply routing device, in a lower position of the suspension system, while **FIG. 8** is a detailed side view of the power supply routing device of **FIG. 7****.** In this upper position of the suspension system, the end part 7c of the reaction rod located on the side of the connection point 9 is a lower position whereas the end part 7d of the reaction rod located on the side of the electric drive axle 2 is in an upper position. In particular, the end part 7c is under the end part 7d. In this configuration, the spring property of the first busbar 12 makes that the busbar loops at the end parts 12b, 12c become bigger and thus each end part 12b, 12c of the first busbar 12 is located at an increased distance from the corresponding end part 7c, 7d of the reaction rod 7.

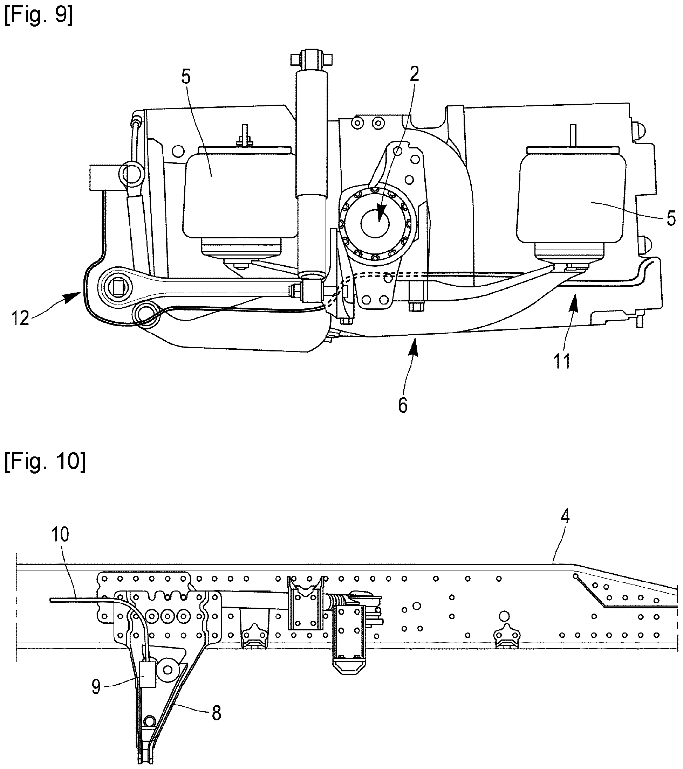

**FIG. 9** is a partial side view of the power supply routing device, during a first pre-assembly step. During this first pre-assembly step, the suspension elements are pre-assembled on the axle 2. In this pre-assembly configuration, the two busbars 11, 12 can also be assembled and connected to the electric motor 3. This allows the second part of the power supply routing device to be carried out as part of the pre-assembly of the electric drive axle and suspension.

**FIG. 10** is a partial side view of the power supply routing device, during a second pre-assembly step. During this second pre-assembly step, the high voltage cables 10 coming from the battery are installed and connected to the connection point 9.

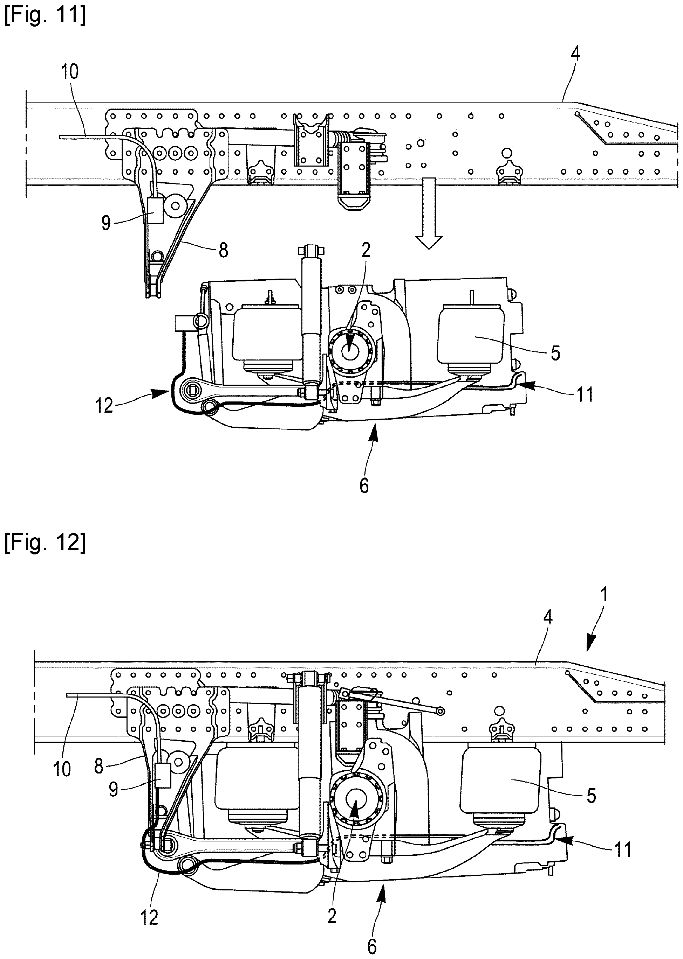

**FIG. 11** is a side view showing an assembly step of the power supply routing device. The chassis and in particular the chassis frame rails 4 are vertically lowered towards the suspension pre-assembly. The two modules (chassis and suspension+axle) are assembled at connection point 9 that is easily accessible.

**FIG. 12** is a side view of the power supply routing device at the end of the assembly step.

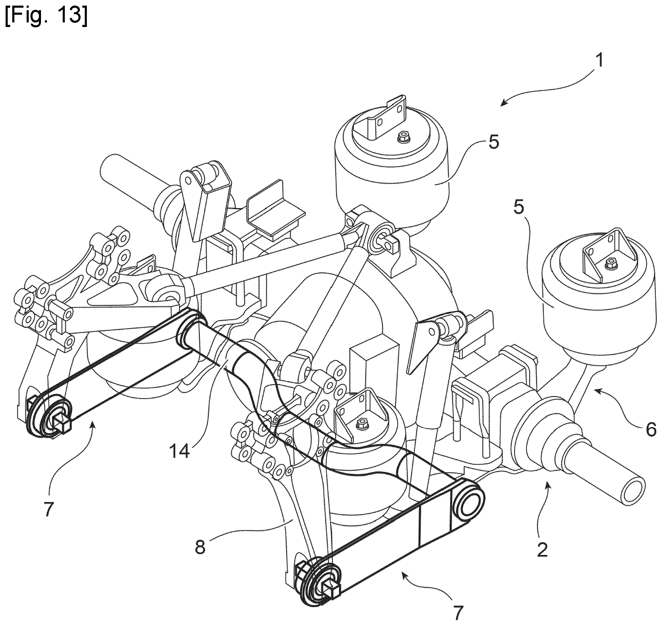

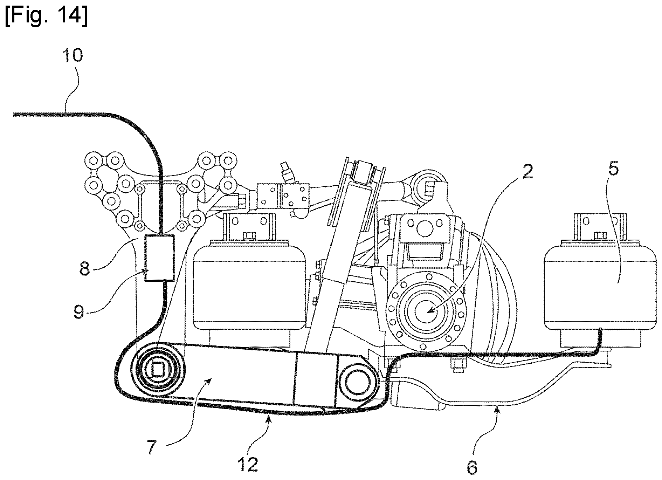

**FIG. 13** is a perspective view of a power supply routing device of a vehicle of the invention according to a second example, while **FIG. 14** is a side view of the power supply routing device of **FIG. 13****.**

According to the second example, which is a variant of the first example, the longitudinal reaction rod 7 is secured to an anti-roll bar 14. The anti-roll bar 14 connects the longitudinal reaction rod 7 on the right of the vehicle 1 to the longitudinal reaction rod 7 on the left of the vehicle 1. The suspension combines therefore the longitudinal reaction rod 7 and the anti-roll bar 14 in a single piece.

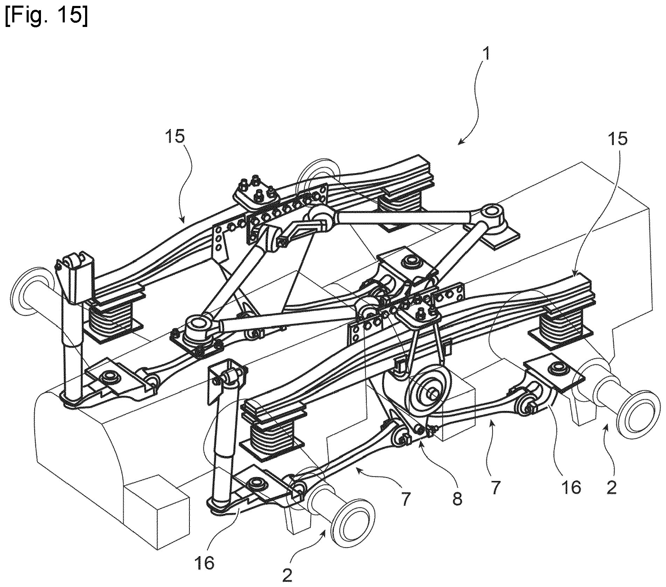

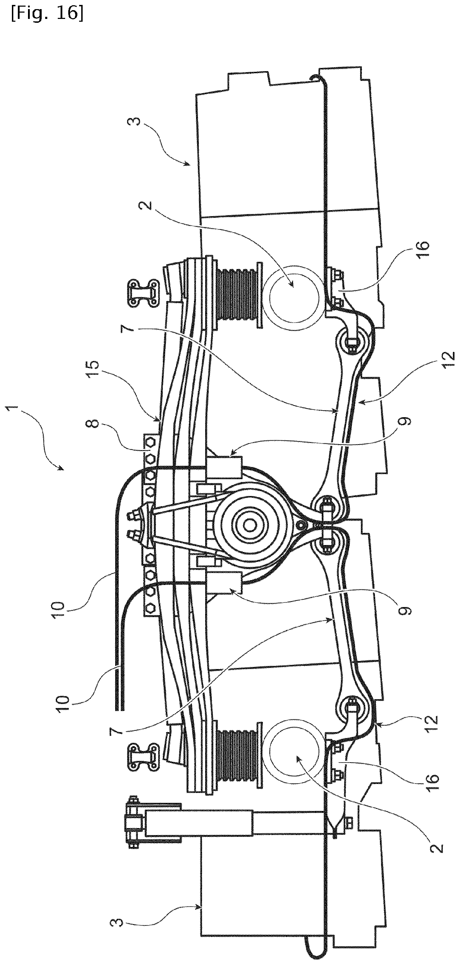

**FIG. 15** is a perspective view of a power supply routing device of a vehicle of the invention according to a third example, while **FIG. 16** is a side view of the power supply routing device of **FIG. 15****.**

According to the third example, each longitudinal reaction rod 7 is rotatably mounted around a reaction rod bracket 8 and around a leaf spring member 16 supporting via the electric drive axle 2 a leaf spring 15 which is positioned above the electric drive axle 2.

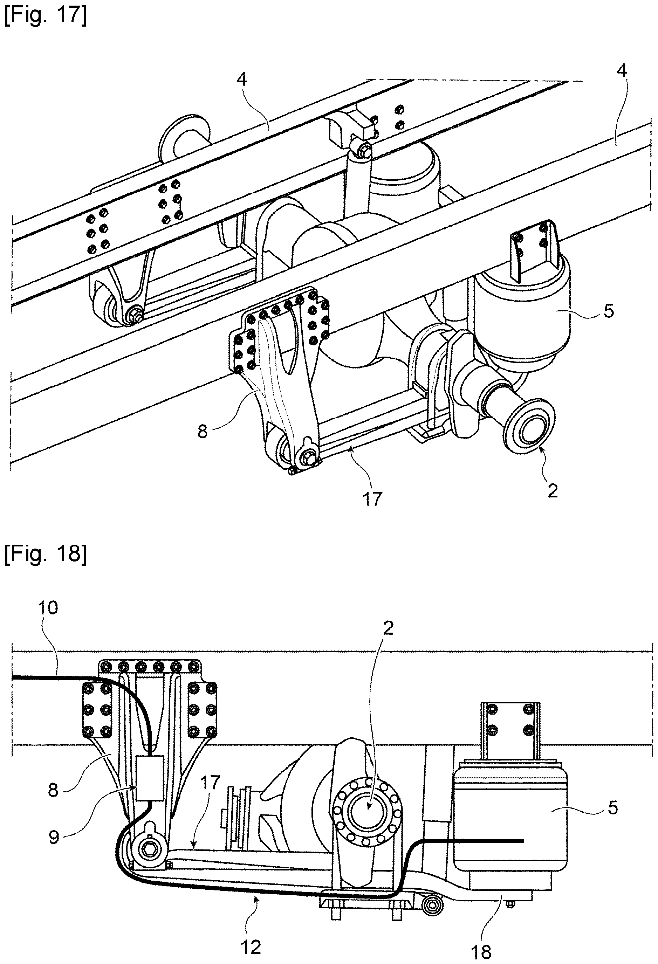

**FIG. 17** is a perspective view of a power supply routing device of a vehicle of the invention according to a fourth example, while **FIG. 18** is a side view of the power supply routing device of **FIG. 17****.**

According to the fourth example, a leaf spring 17 is mounted at one end around a reaction rod bracket 8 and at the other end around a dampening member 18. The dampening member 18 is an air spring member supporting one air spring 5. The leaf spring 17 can be rotatably mounted around the reaction rod bracket 8 and around the dampening member 18.

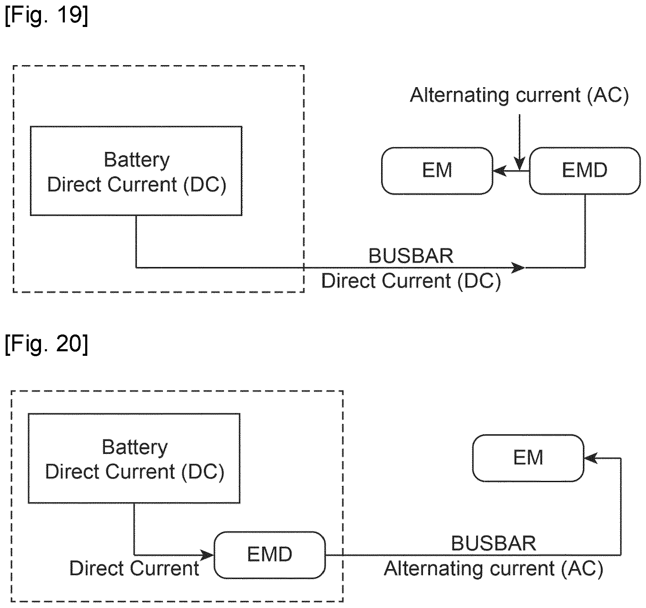

**FIG. 19** is a block diagram illustrating a first configuration of a power supply routing device of a vehicle of the invention.

The function of the Electric Motor Drive (EMD) is to extract electrical energy from the electrical power source and supply the electrical energy to the motor, in order to obtain the desired mechanical output. The mechanical output is generally motor speed, torque and/or motor shaft position. Thus, the EMD converts direct current from the battery into alternating current for the electric motor (EM). The electrical power source can be a rechargeable battery pack, a fuel cell module or an alternator recovering electrical energy from the rotation of an internal combustion engine (ICE). Indeed, some vehicle manufacturers equip Battery Electric Vehicles (BEVs) with a small ICE that delivers electrical current to the EMD when the battery is depleted/discharged.

The electric drive train includes both the EM and the EMD. The EM transfers electricity into rotational force. The EMD transfers the direct current from the batteries into alternating current to the EM and controls torque and speed of rotation of the EM.

In the first configuration, the EMD is placed on the electric drive axle.

**FIG. 20** is a block diagram illustrating a second configuration of a power supply routing device of a vehicle of the invention. In the second configuration, the EMD is placed on the frame/chassis.

There are many advantages to use busbars in the power supply routing device. The busbars can be easily clamped to the suspension components. An operator can easily install the busbars, and it is easy to find a routing path, because busbars are much easier to pre-shape than the high-voltage cables that require a minimum bending radius.

The terminology used herein is for the purpose of describing particular aspects only and is not intended to be limiting of the disclosure. As used herein, the singular forms "a," "an," and "the" are intended to include the plural forms as well, unless the context clearly indicates otherwise. As used herein, the term "and/or" includes any and all combinations of one or more of the associated listed items. It will be further understood that the terms "comprises," "comprising," "includes," and/or "including" when used herein specify the presence of stated features, integers, steps, operations, elements, and/or components, but do not preclude the presence or addition of one or more other features, integers, steps, operations, elements, components, and/or groups thereof.

It will be understood that, although the terms first, second, etc., may be used herein to describe various elements, these elements should not be limited by these terms. These terms are only used to distinguish one element from another. For example, a first element could be termed a second element, and, similarly, a second element could be termed a first element without departing from the scope of the present disclosure.

Relative terms such as "below" or "above" or "upper" or "lower" or "horizontal" or "vertical" may be used herein to describe a relationship of one element to another element as illustrated in the Figures. It will be understood that these terms and those discussed above are intended to encompass different orientations of the device in addition to the orientation depicted in the Figures. It will be understood that when an element is referred to as being "connected" or "coupled" to another element, it can be directly connected or coupled to the other element, or intervening elements may be present. In contrast, when an element is referred to as being "directly connected" or "directly coupled" to another element, there are no intervening elements present.

Unless otherwise defined, all terms (including technical and scientific terms) used herein have the same meaning as commonly understood by one of ordinary skill in the art to which this disclosure belongs. It will be further understood that terms used herein should be interpreted as having a meaning consistent with their meaning in the context of this specification and the relevant art and will not be interpreted in an idealized or overly formal sense unless expressly so defined herein.

It is to be understood that the present disclosure is not limited to the aspects described above and illustrated in the drawings; rather, the skilled person will recognize that many changes and modifications may be made within the scope of the present disclosure and appended claims. In the drawings and specification, there have been disclosed aspects for purposes of illustration only and not for purposes of limitation, the scope of the inventive concepts being set forth in the following claims.

## Claims

1. A vehicle electric axle, comprising at least one electric motor and a suspension system including a longitudinal element (7, 17) which is a reaction rod (7) or a leaf spring (17), the longitudinal element (7, 17) being rotatably mounted at one end around a reaction rod bracket (8) and at the other end around a dampening member (6, 16, 18);
wherein said at least one electric motor includes a power supply routing device to be connected to an electrical power source, said power supply routing device comprises at least one busbar (12), a straight portion (12a) of which extending longitudinally along the longitudinal element (7, 17), and
wherein said at least one busbar (12) includes two curved portions (12b, 12c) forming two cavities each receiving at least part of a longitudinal end (7c, 7d) of the longitudinal element (7, 17).

2. The vehicle electric axle of claim 1, wherein the longitudinal element is a reaction rod (7) and wherein the dampening member (6, 16, 18) is an air spring member (6) supporting two air springs (5).

3. The vehicle electric axle of claim 2, wherein the air spring member (6) extends longitudinally and comprises an air spring reception area (6a) at a front end and an air spring reception area (6a) at a rear end, as well as an axle reception area (6b) in a middle area of the air spring member (6).

4. The vehicle electric axle of any of claims 2-3, wherein a first air spring (5) is arranged at the front of the electric drive axle (2) and a second air spring (5) is arranged at the rear of the drive axle (2).

5. The vehicle electric axle of any of claims 2-4, wherein the longitudinal element (7) is secured to an anti-roll bar (14).

6. The vehicle electric axle of claim 1, wherein the longitudinal element is a reaction rod (7) and wherein the dampening member (6, 16, 18) is a leaf spring member (16) supporting a leaf spring (15).

7. The vehicle electric axle of any claims 1, wherein the longitudinal element (7, 17) is a leaf spring (17) and wherein the dampening member (6, 16, 18) is an air spring member (18) supporting one air spring (5).

8. The vehicle electric axle of any claims 1-7, wherein each curved portion (12b, 12c) is configured so that each longitudinal end (7c, 7d) of the longitudinal element is in contact with or is located close to the at least one busbar (12) in a first extreme configuration of the suspension system and so that each longitudinal end (7c, 7d) of the longitudinal element is located remotely from the first busbar (12) in a second extreme configuration of the suspension system.

9. The vehicle electric axle of any claims 1-8, wherein the straight portion (12a) of said at least one busbar (12) is fixed to a straight central part (7b) of the longitudinal element (7, 17) and wherein said two curved portions (12b, 12c) each at least partly follow the contour of a rounded end part (7c, 7d) of the longitudinal element (7, 17), each curved portion (12b, 12c) having an overlength superior to the corresponding perimeter of the rounded end part (7c, 7d) of the longitudinal element (7, 17).

10. The vehicle electric axle of any one of the claims 1-9, wherein the power supply routing device comprises another busbar (11) connecting said at least one busbar (12) to an electric motor (3).

11. The vehicle electric axle of any one of the claims 1-10, wherein said at least one busbar (12) is connected to electric cables (10) supplying power from a power supply.

12. The vehicle electric axle of claim 11, wherein a connection point (9) between the electric cables (10) and said at least one busbar (12) is located on a chassis frame rail (4) or on the reaction rod bracket (8).

13. A vehicle comprising a vehicle electric axle according to any one of claims 1-12.

14. The vehicle (1) of claim 13, wherein the power supply is hung onto a chassis of the vehicle.

15. The vehicle (1) of any of claims 13-14, wherein the vehicle (1) is a truck.
